# EUROPÄISCHE PATENTSCHRIFT

(11) **EP 0 428 495 B1**
(45) Veröffentlichungstag und Bekanntmachung des Hinweises auf die Patenterteilung: **11.05.1994**
(21) Anmeldenummer: 90890228.1
(22) Anmeldetag: 26.07.1990
(51) Int. Cl.: A01B 17/00

(54) **Pflug mit einem Zusatzgerät**
Plough with additional implement
Charrue équipée d'un outil additionnel

(30) Priorität: 13.11.1989 AT 2596/89
(43) Veröffentlichungstag der Anmeldung: 22.05.1991
(73) Patentinhaber: Schiefermair, Augustinus, A-4521 Schiedlberg (AT)
(72) Erfinder: Schiefermair, Augustinus, A-4521 Schiedlberg (AT)
(74) Vertreter: Casati, Wilhelm, Dipl.-Ing.

(56) Entgegenhaltungen:
- AT-B- 374 073
- AT-B- 387 127
- FR-A- 2 346 951
- FR-A- 2 517 507

## Beschreibung

Die Erfindung betrifft einen Pflug mit einem Zusatzgerät, das als zumindest einem der Pflugkörper furchenseitig zugeordnetes, rotierend von der Zugfurche des Schleppers her antreibbaren Zerkleinerungswerkzeug zum Zer- und Verteilen des von den Pflugkörpern aufgeworfenen Bodens ausgebildet ist und von wenigstens einem, am Pflugrahmen frei hochschwenkbar angelenkten Ausleger getragen ist, dessen Bewegung gegen den Boden durch einen vorzugsweise höhenverstellbaren Anschlag begrenzt ist und für den eine vertikale Führung vorgesehen ist.

Die US-PS 835,371, die FR-PS Nr. 2,517.507 oder auch die AT-PS 374073 zeigen bereits um horizontale Achsen drehbare Zinkenräder als Zerkleinerungswerkzeuge, die sich jedoch fest und unnachgiebig am Pflugrahmen abstützen. Dabei ist es auch schon bekannt, zur Lagerung der die Zinkenräder tragenden Wellen schwenkbare und mit Stelleinrichtungen versehene Ausleger zu verwenden, um den Bodenabstand der Zerkleinerungswerkzeuge ändern zu können. Diese bekannten Ausleger lassen sich aber, wie andere Stelleinrichtungen für die Werkzeuge auch, nur bewußt für den jeweiligen Einsatz der Werkzeuge verändern und bleiben in den jeweils eingestellten Positionen fixiert, so daß für den Arbeitseinsatz immer eine vorgegebene, starre Lagezuordnung der Zerkleinerungswerkzeuge sowohl zu den Pflugkörpern, als auch zur Bodenoberfläche vorliegt. Beim Pflügen liegen immer Unebenheiten vor, dadurch kommt es häufig zu Schoppungen, noch häufiger kommt es jedoch vor, daß die Furchen durch die Starrheit der Zinkenräder gar nicht erfaßt werden und über die Furchen hinweggehen, da der Pflug während des Pflügens seitlich immer bewegt wurde. Dies bedingt nicht nur höhere Antriebsenergien, sondern erhöht auch die Beschädigungsgefahr für das ganze Zusatzgerät, vor allem kommt es jedoch zu einer starken Beeinträchtigung der Werkzeugwirkung und zu sehr unterschiedlichen Bearbeitungsergebnissen bei der Bodenaufbereitung.

Gemäß der CH-PS 597 741 (entsprechend der FR-PS 2 346 951) gibt es weiters bereits Drehpflüge mit Zusatzgerät, das als Zerkleinerungswerkzeuge am Boden abrollende Walzen besitzt, die an frei schwenkbar am Pflugrahmen angelenkten Schwingen nachlaufend gelagert sind. Diese lose am Boden aufsitzenden Walzen folgen jeder Senke des Bodens und überrollen jeden Klumpen, so daß es statt zu einer Zerkleinerung, eher zu einem Zusammenpressen der Schollen kommt, was unerwünscht ist. Zur Beseitigung dieses Mangels wurde nun bereits in der AT-PS 387 127, in der ein Zusatzgerät vor allem für Beetpflüge beschrieben ist, vorgeschlagen, für die Ausleger im werkzeugseitigen Endbereich eine vertikale Führung vorzusehen und die Ausleger bodenseitig lose auf einem vorzugsweise höhenverstellbaren Endanschlag aufliegen zu lassen. Der Schwenkbereich der Ausleger wird dadurch nach unten begrenzt; bei Überbelastung heben die Ausleger vom Anschlag ab und passen sich so selbständig an die jeweils gegebene Bodenkonfiguration an. Unabhängig von der Art und/oder dem Antrieb der Zerkleinerungswerkzeuge werden Bodenunebenheiten ausgeglichen, unterschiedliche Schollengrößen berücksichtigt, Erdschoppungen vermieden, woraus eine feine und gleichmäßige Bodenkrümelung resultiert. Durch die wählbare Einstellung der Anschläge hinsichtlich ihres Bodenabstandes läßt sich ein gewollter Mindestbodenabstand für die Zerkleinerungswerkzeuge einhalten und deren Lage an die jeweiligen Bodenverhältnisse anpassen, ohne daß dadurch die Anpassungs- und Ausgleichsfähigkeit der Zerkleinerungswerkzeuge verloren ginge, da deren freie Beweglichkeit nach oben erhalten bleibt. Die Vertikalführungen bringen eine leichtere Beweglichkeit der Ausleger mit sich und sorgen gleichzeitig für eine stabile Abstützung der Werkzeuge gegen die auftretenden Horizontalkräfte, wodurch ein störungsfreier, funktionssicherer Betrieb des Zusatzgerätes gewährleistet werden kann.

Durch die vorliegende Erfindung soll nun ein Pflug mit einem solchen Zusatzgerät weiter entwickelt werden, um auch Drehpflüge damit einfach ausstatten zu können.

Diese Aufgabe wird erfindungsgemäß dadurch gelöst, daß bei einem Drehpflug jedem Ausleger jeweils zwei Anschläge zugeordnet sind, die jeweils einer Doppelpflugschar zugeordnet sind, so daß beim Drehen des Pfluges, der Ausleger, samt dem von ihm getragenen Zerkleinerungswerkzeug, selbsttätig aus dem Bereich 5 des beim Schwenken die Arbeitsstellung verlassenden Pflugkörpers gegen den abgesenkten Pflugkörper schwenken kann und daß die vertikale Führung sich über beide der einander gegenüberliegenden Pflugkörper bzw. deren Streichbleche erstreckt, so daß beim Drehen des Pfluges der Ausleger in der Führung von dem aus der Arbeitsstellung gehobenen Pflugkörper gegen den in die Arbeitsstellung gesenkten Pflugkörper selbsttätig gleiten kann.

Weitere Merkmale der Erfindung werden anhand eines in der Zeichnung dargestellten Ausführungsbeispieles des Erfindungsgegenstandes bei einem dreischarigen Drehpflug näher erläutert. Es zeigen, die
Fig. 1 und 2 einen aus der AT-PS 387 127 bekannten Beetpflug mit Zerkleinerungswerkzeugen an einem frei hochschwenkbaren Ausleger, die
Fig. 3 einen erfindungsgemäß ausgerüsteten Pflug, mit drei Scharen in schräger Seitenansicht, und
Fig. 4 den Pflug gemäß Fig. 3 in Hinteransicht, jedoch mit gegenüber Fig. 3 geänderter Befestigung der vertikalen Führung der die Zerkleinerungswerkzeuge tragenden Ausleger.

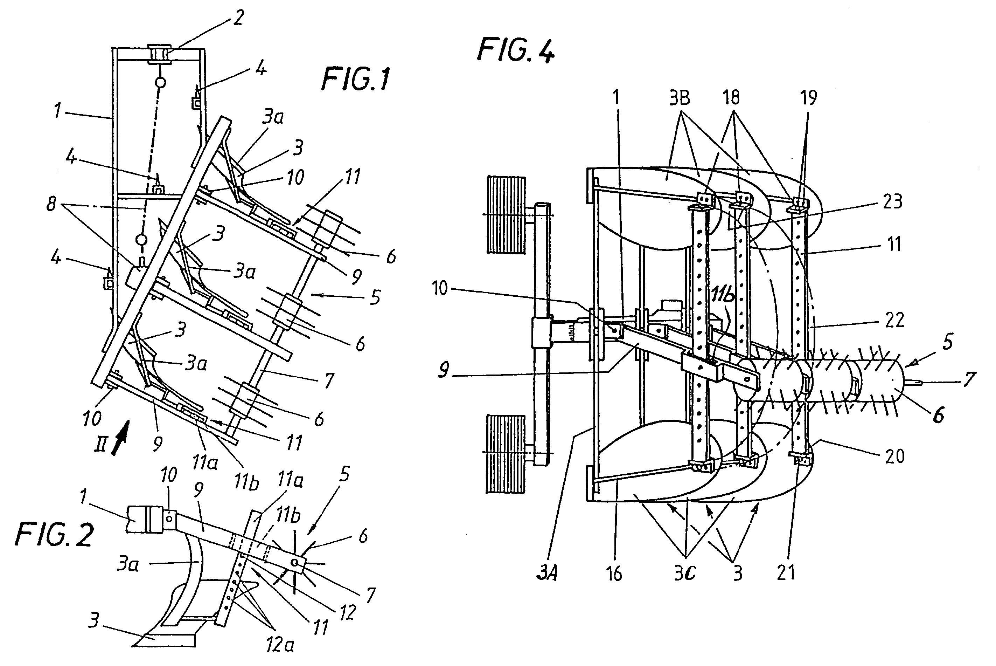

Ein Pflugrahmen 1, der mit seinem Anbaubock 2 an ein nicht weiter dargestelltes Dreilenkersystem (Dreipunkthydraulik) eines Schleppers angebaut werden kann, trägt drei gegeneinander schräg zur Fahrtrichtung versetzt hintereinander gereihte Pflugkörper 3 und diesen vorgelagerte Seche 4 (Fig. 1). Um gleichzeitig mit dem Pflügen eine feine Zerkrümelung des Bodens zu erreichen, sind den Pflugkörpern 3 furchenseitig Zerkleinerungswerkzeuge 5 zugeordnet, die die von den Pflugkörpern 3 aufgeworfene Erde gleichmäßig zerkrümeln und verteilen. Die Zerkleinerungswerkzeuge 5 sind als Zinkenräder 6 ausgebildet, die auf einer gemeinsamen Antriebswelle 7 sitzen und über eine geeignete Antriebsverbindung 8 von der Zapfwelle des Schleppers her angetrieben werden. Die Antriebswelle 7 ist an Auslegern 9 gelagert, die über Gelenke 10 schwenkbar am Pflugrahmen 1 angelenkt sind. Die Ausleger 9 können frei um die horizontale Gelenksachse hochschwenken, wobei sie im Bereich der Zerkleinerungswerkzeuge 5 mit vertikalen Führungen 11 zusammenwirken, die den Werkzeugen Seitenstabilität verleihen. Anschläge 12 begrenzen die Schwenkbewegung der Ausleger 9 gegen den Boden und bestimmen dadurch den Mindestbodenabstand der Zerkleinerungswerkzeuge. Die Anschläge 12 sind als Steckbolzen verwirklicht, die die vertikalen Führungen 11 durchsetzen, wobei mehrere Steckbolzenaufnahmen 12a eine Einstellung der Anschläge 12 in verschiedenen Höhenlagen ermöglichen. Die vertikalen Führungen 11 selbst sind als Schienen 11a ausgebildet, die in Führungsschlitze 11b an den Auslegern 9 eingreifen, wobei zweckmäßigerweise die Schienen 11a an den Pflugkörpern 3 bzw. deren Streichblechen 3a befestigt werden.

Die frei bewegliche Abstützung der Zerkleinerungswerkzeuge 5 über die Ausleger 9 und die vertikalen Führungen 11 mit den Anschlägen 12 erlaubt einen sicheren und störungsfreien Werkzeugeinsatz, bei dem die Zerkleinerungswerkzeuge 5 den jeweiligen Bodenverhältnissen entsprechend ihren Bodenabstand mehr oder weniger vergrößern und selbsttätig für die Optimierung ihrer Einsatzlage und für ein ordnungsgemäßes Arbeiten sorgen.

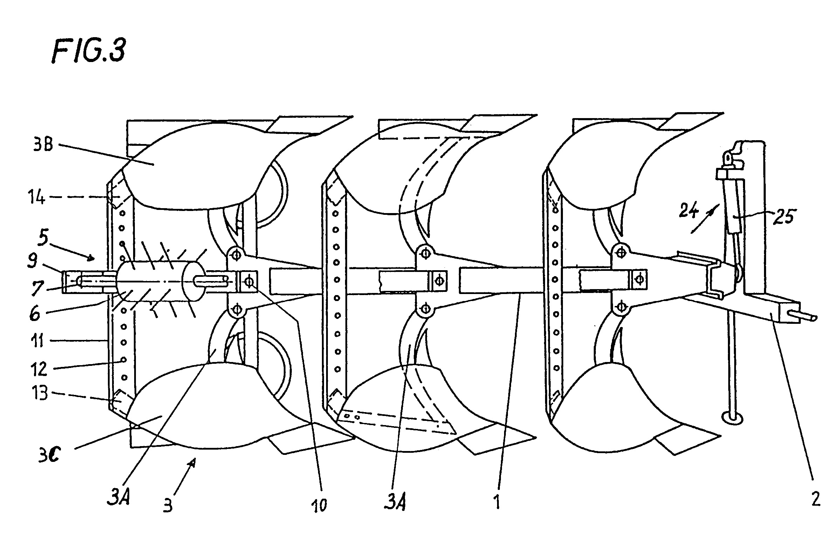

Bei dem erfindungsgemäßen Ausführungsbeispiel gemäß den Fig. 3 und 4 ist der Pflugrahmen 1 bzw. das tragende Grindel über den Ausbaubock 2 an dem nicht dargestellten Traktor in an sich bekannter Weise drehbar gelagert. Zum Drehen des Grindels 1 ist ein exzentrisch zur (nicht dargestellten) Drehachse des Pfluges angreifendes Kolben/Zylinderaggregat 24 vorgesehen, dessen Zylinder 25 schwenkbar am Anbaubock 2 gelagert ist. Die Pflugscharen 3 sind im vorliegenden Fall in Gestalt dreier Doppelpflugscharen vorhanden und mittels des rahmenartigen Pflugkörperhalters 3a am tragenden Grindel 1 befestigt. Jede Pflugschar 3 besitzt zwei einander gegenüberliegende Pflugkörper mit Streichblechen 3B bzw. 3C, die wechselweise in Arbeitsstellung gebracht werden. Jeder Pflugschar 3, die als Doppelpflugschar vorliegt, ist ein Zerkleinerungswerkzeug 5 zugeordnet, welches zur Zerkleinerung und Verteilung der von den jeweils arbeitenden Pflugkörpern bzw. deren Streichblechen (z.B. 3A) gemäß der in Fig. 3 wiedergegebenen Stellung des Drehpfluges aufgeworfenen Erde dient. Die Zerkleinerungswerkzeuge 5 schließen an den jeweils abgesenkten Pflugkörpern bzw. dessen Streichblech (z.B. 3A in Fig. 3) an und sind wie bei der Ausführung der Fig. 1 und 2 als Zinkerträger 6 ausgebildet. Die Zinkenräder 6 sitzen auf einer gemeinsamen Antriebswelle 7, die über eine beliebige Antriebsvorrichtung angetrieben wird. Zur Lagerung der Zerkleinerungswerkzeuge 5 bzw. von deren Antriebswelle 7 sind die Ausleger 9 vorgesehen, die am Grindel 1 durch ein Gelenk 10, Scharnier od.dgl. in einer lotrechten Ebene um eine horizontale Achse frei schwenkbar gelagert sind.

Die Ausleger 9 sind im Bereich der Zerkleinerungswerkzeuge 5 an in der Gebrauchslage vertikalen Führungen 11 geführt, welche den Zerkleinerungswerkzeugen 5 Seitenstabilität verleihen.Die Führungen 11 sind vorzugsweise von Schienen gebildet, welche, wie dies als Ausführungsbeispiel in Fig. 3 dargestellt ist, an Fortsätzen 13, 14 der Pflugkörper bzw. von deren Streichblechen 3C bzw.3B, an den Pflugkörperhaltern oder am Pflugrahmen bzw.Grindel 1 befestigt sind und die Anschläge 12 zur Begrenzung der Schwenkbewegung der Ausleger 9 gegen den Boden aufweisen und dadurch den Mindestabstand der Zerkleinerungswerkzeuge 5 vom Boden bestimmen.

Ein gegenüber Fig. 1 abgeändertes Ausführungsbeispiel für die Befestigung der Führungen 11 ist in Fig. 4 dargestellt, wo an der Rückseite jedes Pflugkörpers bzw. Streichbleches 3C bzw. 3B eine Versteifungsrippe 16 ersichtlich ist, die an ihrem einen Ende mit dem Pflugkörperhalter 3a und mit ihrem anderen Ende mittels winkelförmiger Laschen 18 und Schrauben 19 am Pflugkörper bzw. an dessen Streichblech 3C bzw. 3B befestigt ist. Hiebei ist in dem vom Streichblech 3C bzw. 3B wegweisenden Schenkel 20 der Lasche 18 ein Loch vorgesehen, in welches ein mit der Führung 11 fest verbundener Zapfen 21 eingreift, der durch eine nicht dargestellte Schraube oder einen ebenfalls nicht dargestellten Splint od.dgl. gesichert ist.

In Fig. 3 ist der Einfachheit halber nur im Bereich einer (der hintersten) Pflugschar 3 ein Zerkleinerungswerkzeug 5 in einer Mittelstellung zwischen den Doppelpflugscharen dargestellt. In der Arbeitsstellung befindet sich das Zerkleinerungswerkzeug 5, jedoch jeweils im Bereich des unteren Pflugkörpers bzw. im Bereich von dessen Streichblech 3C. Wird der Pflug gedreht, wodurch der untere Pflugkörper bzw. dessen Streichblech 3C aus der Arbeitsstellung in die bodenferne Ruhestellung oben und gleichzeitig der obere Pflugkörper bzw. dessen Streichblech 3B aus der bodenfernen Ruhestellung in die Arbeitsstellung verschwenkt wird, fällt das Zerkleinerungswerkzeug 5 mit seinem Ausleger 9 unter der Wirkung des Eigengewichtes entlang der Führung 11 jeweils nach unten zu dem sich jeweils in Arbeitsstellung befindlichen Pflugkörper bzw. dessen Streichblech. Ohne ein spezielles Hantieren ist daher bei einem Drehpflug das Zerkleinerungswerkzeug automatisch immer den jeweils in der Arbeitsstellung befindlichen Pflugkörpern bzw. deren Streichblechen zugeordnet.

Als Anschläge 12 für die Ausleger 9 können Steckbolzen verwendet werden, die in Aufnahmelöcher in den Führungen 11 einsteckbar sind, wobei jedem Ausleger jeweils zwei Anschläge 12 zugeordnet sind, die jeweils einer Doppelpflugschar zugeordnet sind.

Schließlich können im Bereiche der Zerkleinerungswerkzeuge 5, wie in Fig. 4 dargestellt ist, Schutzbleche 22 vorgesehen sein, durch welche eine Verletzung der Bedienungsperson und/oder eine Beschädigung der Zerkleinerungswerkzeuge 5 verhindert wird. Die Schutzbleche 22 sind vorzugsweise nach außen gewölbt ausgebildet, damit die freie Bewegbarkeit der Zerkleinerungswerkzeuge bzw. des Zinkenrades 6 nicht behindert wird. Die Schutzbleche 22 lassen an ihren freien Enden einen Raum frei, durch welchen jeweils das Zerkleinerungswerkzeug 5 zum Boden gelangen kann. Die Schutzbleche 22 besitzen an ihren Enden Laschen 23, mittels welchen sie durch die Schrauben 19 zwischen den Winkellaschen 18 für die Befestigung der vertikalen Führungen 11 der Ausleger 9 und dem Pflugkörper bzw. dessen Streichblech 3C bzw. 3B an diesem befestigt werden können.

## Patentansprüche

1. Pflug mit einem Zusatzgerät, das als zumindest einem der Pflugkörper (3) furchenseitig zugeordnetes, rotierend von der Zapfwelle des Schleppers her antreibbaren Zerkleinerungswerkzeug (5) zum Zer- und Verteilen des von den Pflugkörpern aufgeworfenen Bodens ausgebildet ist und von wenigstens einem, am Pflugrahmen (1) frei hochschwenkbar angelenkten Ausleger (9) getragen ist, dessen Bewegung gegen den Boden durch einen, vorzugsweise höhenverstellbaren, Anschlag (12) begrenzt ist und für den eine vertikale Führung (11) vorgesehen ist, dadurch gekennzeichnet, daß der Pflug ein Drehpflug ist, bei welchem jedem Ausleger (9) jeweils zwei Anschläge (12) zugeordnet sind, die jeweils einer Doppelpflugschar zugeordnet sind, so daß beim Drehen des Pfluges, der Ausleger (9), samt dem von ihm getragenen Zerkleinerungswerkzeug (5), selbsttätig aus dem Bereich des beim Schwenken die Arbeitsstellung verlassenden Pflugkörpers gegen den abgesenkten Pflugkörper (3C, 3B) schwenken kann und daß die vertikale Führung (11) eines jeden Auslegers sich über beide der einander gegenüberliegenden Pflugkörper bzw. deren Streichbleche (3C, 3B) erstreckt, so daß beim Drehen des Pfluges der Ausleger (9) in der Führung (11) von dem aus der Arbeitsstellung gehobenen Pflugkörper gegen den in die Arbeitsstellung gesenkten Pflugkörper selbsttätig gleiten kann.

2. Pflug nach Anspruch 1, dadurch gekennzeichnet, daß die vertikale Führung (11) an der Innenseite zweier einander gegenüberliegender Pflugkörper bzw. an deren Streichblechen (3C, 3B) befestigt ist.

3. Pflug nach Anspruch 1, dadurch gekennzeichnet, daß das Zerkleinerungswerkzeug (5) durch ein Schutzblech (22) abgedeckt ist.

4. Pflug nach Anspruch 3, dadurch gekennzeichnet, daß das Schutzblech (22) an seinen beiden Enden an der Befestigungsstelle der vertikalen Führung (11) am Pflugkörper bzw. an dessen Streichblech (3C, 3B) gehalten ist.

## Claims

1. Plough with an additional apparatus which is constructed as a comminution tool (5) associated with at least one of the plough elements (3) on the furrow side, rotatably drivable by the power take off shaft of the tractor, this comminution tool (5) being constructed to break up and distribute the soil thrown up by the plough elements and carried by at least one beam (9) which is articulated on the plough frame (1) so as to be freely upwardly pivotable, the movement thereof towards the ground being limited by a preferably vertically adjustable stop (12), a vertical guide (11) being provided for said beam, characterised in that the plough is a rotary plough in which each beam (9) is associated with two stops (12) which are each associated with a double ploughshare, so that as the plough rotates, the beam (9) together with the comminution tool (5) which it carries can automatically pivot out of the range of the plough element moving out of the working position as it pivots, towards the lowered plough element (3C, 3B), and in that the vertical guide (11) of each beam extends over both of the plough elements located opposite one another, or the scraper blades (3C, 3B) thereof, so that, as the plough rotates, the beam (9) can automatically slide in its guide (11) from the plough element lifted out of the working position towards the plough element which is lowered into the working position.

2. Plough according to claim 1, characterised in that the vertical guide (11) is secured to the inside of two opposing plough elements or on the scraper blades (3C, 3B) thereof.

3. Plough according to claim 1, characterised in that the comminution tool (5) is covered by a protective guard (22).

4. Plough according to claim 3, characterised in that the protective guard (22) is held at both ends at the fixing point of the vertical guide (11) on the plough element or on the scraper blade (3C, 3B) thereof.

## Revendications

1. Charrue équipée d'un outil additionnel sous la forme d'un brise-mottes tournant (5), monté sur l'un des corps de charrue (3) au moins, du côté sillon, commandé à partir de la prise de force du tracteur, conçu pour émietter et répartir la terre retournée par les corps de charrue, et prenant appui sur au moins un bras (9), librement orientable en hauteur et articulé sur le bâti (1), dont le mouvement vers le sol est limité par une butée (12), laquelle est de préférence réglable en hauteur et prévue avec un guide vertical (11),
caractérisée en ce que la charrue est une charrue réversible dont chacun des bras (9) comporte deux butées (12) ; un bisoc est affecté à chacune de ces butées, de sorte que, lors du retournement de la charrue, le bras (9), avec le brise-mottes qu'il supporte (5), peut pivoter automatiquement hors de la zone du corps de charrue quittant sa position de travail lors du retournement et se placer dans la position de travail du corps de charrue (3C, 3B) qui est abaissé,
et en ce que le guide vertical (11) de chacun des bras s'étend au-dessus des deux corps de charrue montés face à face ou des versoirs (3C, 3B) de ces deux corps, de sorte que, lors du retournement de la charrue, le bras (9) peut coulisser automatiquement dans le guide 11, depuis le corps de charrue qui est relevé hors de sa position de travail jusqu'au corps de charrue qui est abaissé vers sa position de travail.

2. Charrue selon la revendication (1), caractérisée en ce que le guide vertical (11) est fixé sur la face interne des deux corps de charrue montés face à face, ou sur leurs versoirs (3C, 3B).

3. Charrue selon la revendication 1, caractérisée en ce que le brise-mottes (5) est couvert par une tôle de protection (22).

4. Charrue selon la revendication 3,
caractérisée par le fait que la tôle de protection (22) est maintenue à ses deux extrémités par la pièce de fixation du guide vertical (11) à un corps de charrue, ou à son versoir (3C, 3B).
